# EUROPEAN PATENT APPLICATION

(11) **EP 1 302 812 A2**
(43) Date of publication of application: **16.04.2003**
(21) Application number: 02022967.0
(22) Date of filing: 14.10.2002
(51) Int. Cl.: G03B 21/00

(54) **Illumination system and projector adopting the same**

(30) Priority: 12.10.2001 KR 2001062936
(71) Applicant: SAMSUNG ELECTRONICS CO., LTD., Suwon-City, Kyungki-do (KR)
(72) Inventor: Kim, Sung-ha, Paldal-gu, Suwon-si, Gyeonggi-do (KR); Sokolov, Kirill Sergeevich, Paldal-gu, Suwon-si, Gyeonggi-do (KR)
(74) Representative: Grünecker, Kinkeldey, Stockmair & Schwanhäusser Anwaltssozietät

(57) **Abstract**

An illumination system includes an illumination unit including at least one light emitting device for emitting a light beam having a predetermined wavelength and at least one holographic optical element for reducing a cross section of the light beam emitted from the light emitting device, and a first optical path changer for changing a proceeding path of an incident light passing through the holographic optical element. A projector includes at least one illumination unit comprising at least one light emitting device for emitting a light beam having a predetermined wavelength and at least one holographic optical element for reducing a cross section of the light beam emitted from the light emitting device, a first optical path changer for changing a proceeding path of an incident light input through the holographic optical element, a display device for forming an image by processing a light beam input from the first optical path changer according to an image signal, and a projection lens unit for magnifying the image formed by the display device and projecting the magnified image toward a screen.

## Description

### BACKGROUND OF THE INVENTION

### 1. Field of the Invention

The present invention relates to an illumination system and a projector adopting the same, and more particularly, to an illumination system capable of realizing a color image without a color wheel, and a projector adopting the illumination system.

### 2. Description of the Related Art

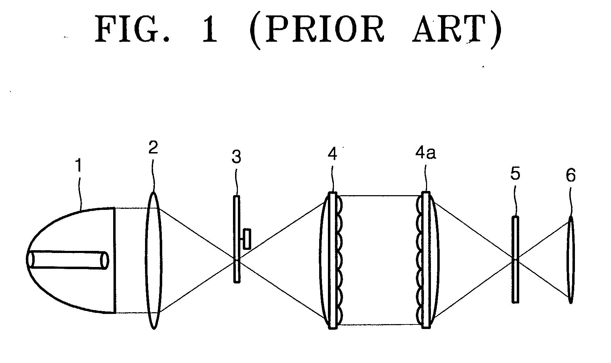

Referring to FIG. 1, a conventional projector includes a light source 1, a first relay lens 2 for condensing a light beam emitted from the light source 1, a color wheel 3 for splitting an incident light beam into R, G and B color light beams, a fly eye lens 4 for making the light beam passing through the color wheel 3 uniform, a second relay lens 4a for condensing the light beam passing through the fly eye lens 4, a display device 5 for forming a color image from the R, G and B color light beams sequentially input through the color wheel 3, and a projection lens system 6 for magnifying and projecting an image formed by the display device 5 toward a screen.

A xenon lamp, a metal-halide lamp, or a UHP lamp is used as the light source 1. These lamps emit an unnecessary infrared ray and ultraviolet ray too much. Accordingly, as a lot of heat is generated, a cooling fan is used to cool the heat down. However, the cooling fan is one of sources to make noise. Also, since the spectrum of the lamp light source is widely distributed across the entire wavelengths, due to a narrow color gamut, the selection of color is limited, color purity is inferior, and the life span is short, so that a stable use of the lamp is not possible.

In the conventional projector, to realize a color image, the color wheel 3 is rotated by a driving motor (not shown) at a high speed so that R, G and B color light beams are sequentially illuminated onto the display device 5. R, G and B color filters are equally arranged on the entire surface of the color wheel 3. The three colors are sequentially used one by one during the rotation of the color wheel 3 according to a response speed of the display device 5, 2/3 of light are lost. Also, since a gap is formed between neighboring color filters for preferable generation of a color, loss of light occurs at the gap.

Furthermore, since the color wheel 3 rotates at a high speed, noise is generated. Also, the mechanical movement of the driving motor has an ill effect on stability. Further, due to a mechanical limit in the driving motor, it is difficult to obtain a speed over a certain degree and a color breakup phenomenon occurs. Also, since a unit price of the color wheel is very high, the manufacturing cost rises.

### SUMMARY OF THE INVENTION

To solve the above-described problems, it is an object of the present invention to provide an illumination system capable of forming a color image without a color wheel by using a light emitting device emitting a light beam having a predetermined wavelength so that color purity and color gamut is improved, and a projector adopting the illumination system.

It is another object of the present invention to provide an illumination system having at least one holographic optical element or a diffraction optical device to minimize the cross section of a light beam so that loss of light is reduced and the volume is reduced, and a projector adopting the illumination system.

To achieve the above objects, there is provided an illumination system comprising an illumination unit including at least one light emitting device for emitting a light beam having a predetermined wavelength and at least one holographic optical element for reducing a cross section of the light beam emitted from the light emitting device, and a first optical path changer for changing a proceeding path of an incident light passing through the holographic optical element.

It is preferred in the present invention that the light emitting device has an array structure.

It is preferred in the present invention that the light emitting device is one of a light emitting diode (LED), a laser diode (LD), an organic electro luminescent (EL), and a field emission display (FED).

It is preferred in the present invention that the holographic optical element comprises a first holographic optical element for changing a proceeding direction of the light beam emitted from the light emitting device or light emitting device array, and a second holographic optical element designed to reduce a diffraction angle of an incident light beam of which the proceeding direction is changed by the first holographic optical element, in which the holographic optical element reduces a cross section of an incident light beam when the light beam is reflected by the first optical path changer.

It is preferred in the present invention that the first holographic optical element is designed to make an incident light beam to be incident on the second holographic optical element inclined at a predetermined angle and to be parallel to each other.

It is preferred in the present invention that the first optical path changer is a reflection mirror.

It is preferred in the present invention that the illumination system further comprises a second optical path changer for changing a proceeding path of the light beam passing through the first optical path changer by selectively transmitting or reflecting the light beam.

It is preferred in the present invention that a plurality of illumination units for emitting a light beam having different wavelengths are arranged in a line in a horizontal direction.

It is preferred in the present invention that the second optical path changer is a dichroic filter for reflecting or transmitting a light beam passing through the first optical path changer according to the wavelength thereof.

It is preferred in the present invention that the second optical path changer is a cholesteric band modulation filter for reflecting or transmitting the light passing through the first optical path changer according to the polarization direction and wavelength thereof.

It is preferred in the present invention that the cholesteric band modulation filter comprises a first mirror surface for reflecting a light beam of right circular polarization and transmitting a light beam of left circular polarization, and a second mirror surface for transmitting a light beam of right circular polarization and reflecting a light beam of left circular polarization, with respect to a beam light having a predetermined wavelength.

It is preferred in the present invention that a plurality of illumination units for emitting light beams having different wavelengths are arranged to be separated from one another at a predetermined angle.

It is preferred in the present invention that the second optical path changer is an X prism or X type dichroic filter.

It is preferred in the present invention that the illumination unit is further arranged in a multi-layer structure.

It is preferred in the present invention that the illumination system as claimed in claim 13, further comprising a parallel light beam forming unit for making the light beam emitted from the light emitting device or light emitting device array a parallel light beam.

To achieve the above objects, there is provided an illumination system comprising at least one light emitting device or light emitting device array for emitting a light beam having a wavelength, a third holographic optical element for condensing the light beam emitted from the light emitting device or light emitting device array, a fourth holographic optical element for making an incident light beam passing through the third holographic optical element a parallel light beam with a reduced cross section thereof, a fifth holographic optical element designed to reduce a diffraction angle of an incident light beam which is made parallel by the fourth holographic optical element, and a first optical path changer for changing a proceeding path of an incident light beam passing through the fifth holographic optical element.

It is preferred in the present invention that the fifth holographic optical element is disposed on a plane different from a plane of a neighboring fifth holographic optical element and does not prevent a proceeding path of a light beam from the neighboring fifth holographic optical element.

To achieve the above objects, there is provided a An illumination system comprising at least one illumination unit having at least one light emitting device for emitting a light beam having a predetermined wavelength and at least one diffractive optical device for reducing a cross section of the light beam emitted from the light emitting device, and a first optical path changer for changing a proceeding path of an incident light beam input through the diffractive optical device.

To achieve the above objects, there is provided a projector comprising at least one illumination unit comprising at least one light emitting device for emitting a light beam having a predetermined wavelength and at least one holographic optical element for reducing a cross section of the light beam emitted from the light emitting device, a first optical path changer for changing a proceeding path of an incident light input through the holographic optical element, a display device for forming an image by processing a light beam input from the first optical path changer according to an image signal, and a projection lens unit for magnifying the image formed by the display device and projecting the magnified image toward a screen.

### BRIEF DESCRIPTION OF THE DRAWINGS

The above objects and advantages of the present invention will become more apparent by describing in detail preferred embodiments thereof with reference to the attached drawings in which:
FIG. 1 is a view showing the structure of a conventional projector;
FIGS. 2 and 3 are views showing the structure of an illumination system according to a preferred embodiment of the present invention;
FIG. 4 is a view showing the structure of an illumination system according to another preferred embodiment of the present invention;
FIGS. 5 through 7 are views optical path changers in the illumination system according to various preferred embodiments of the present invention; and
FIG. 8 is a view showing the structure of a projector adopting the illumination system according to the present invention.

### DETAILED DESCRIPTION OF THE INVENTION

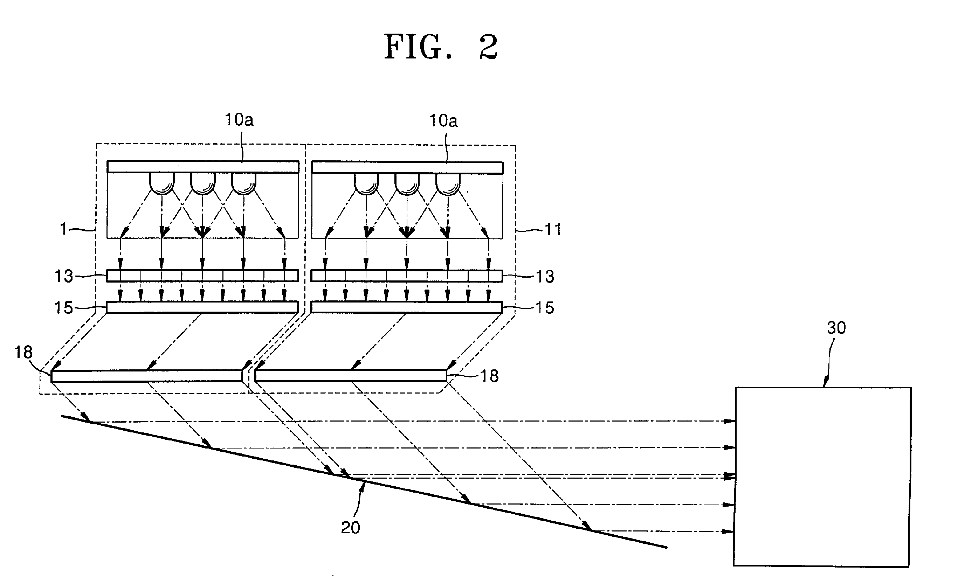

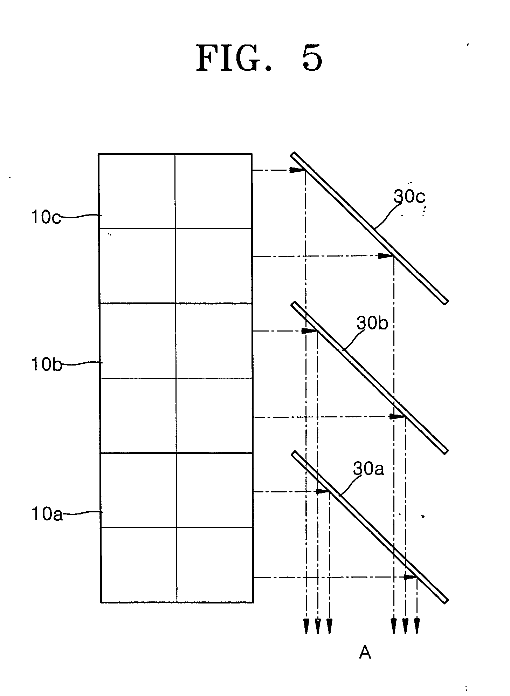

Referring to FIGS. 2 and 5, an illumination system according to a preferred embodiment of the present invention includes at least one light emitting device 10a, 10b, and 10c for emitting a light beam having a predetermined wavelength, an illumination unit 1 and 11 having at least one holographic optical element designed to reduce the cross section of a light beam emitted from the light emitting device 10a, 10b, and 10c, and a first optical path changer 20 for changing a proceeding path of an incident light passing through the holographic optical element.

A LED (light emitting diode), an LD (laser diode), an organic EL (electro luminescent), or an FED (field emission display) is used as the light emitting devices 10a, 10b and 10c. Also, the light emitting devices 10a, 10b and 10c can be arranged in an array. Here, the light emitting device or light emitting device arrays 10a, 10b, and 10c can be formed to emit light beams having different wavelengths by including, for example, a first light emitting device 10a emitting a light beam having a red (R) wavelength, a second light emitting device 10b emitting a light beam having a green (G) wavelength, and a third light emitting device 10c emitting a light beam having a blue (B) wavelength.

The holographic optical element may include a first holographic optical element 15 for making each of the light beams emitted from the first through third light emitting devices or the light emitting device arrays 10a, 10b, and 10c to be inclined and parallel to one another, and a second holographic optical element 18 for diffracting incident light beams passing through the first holographic optical element 15 at a small angle. In general, a holographic optical element having a large diffraction angle is more difficult to manufacture and has a lower diffraction efficiency than a holographic optical element having a relatively small diffraction angle. Considering the above, a beam light is made to be incident on the second holographic optical element 18 with the direction thereof inclined by the first holographic optical element 15, to reduce the diffraction angle of the light beam diffracted by the second holographic element 18.

The proceeding path of the beam diffracted by the second holographic optical element 15 is changed by being reflected by the first optical path changer, for example, a reflection mirror 20. Here, as the diffraction angle of the beam diffracted by the second holographic optical element 18 increases, the cross section of the light beam reflected by the reflection mirror 20 is reduced. In contrast, as describe above, manufacturing a holographic optical element is difficult and the efficiency of diffraction is lowered as the diffraction angle increases. To solve the above problems, the light beam incident on the second holographic optical element 18 is made to be appropriately inclined by using the first holographic optical element 15. Here, although two holographic optical elements, that is, the first and second holographic optical elements 15 and 18, are included in the present embodiment, the effect of reducing the cross section of a light beam can be improved by appropriately arranging two or more holographic optical elements.

Meanwhile, a parallel light beam forming unit 13, such as a collimating lens array or a Fresnel lens array, for making the light beams emitted from the light emitting device or light emitting device arrays 10a, 10b, and 10c parallel to one another, can be provided further. Also, a second optical path changer 30 for secondarily changing an optical path of the light beam with its optical path changed by the first optical path changer 20 so that the light beam can proceed along a desired optical path, can be provided further.

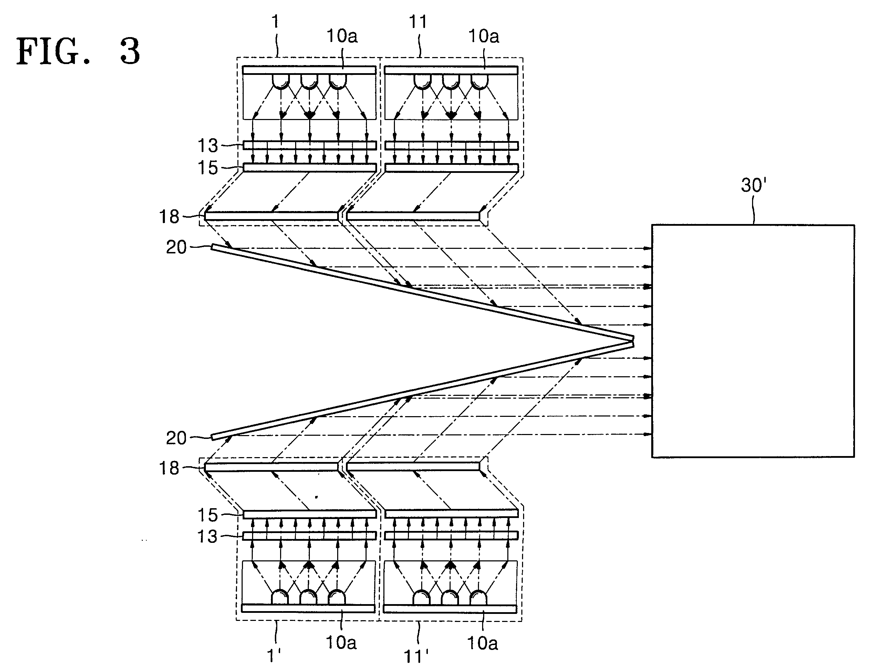

At least one or more illumination units 1 and 11 having the above structure can be provided for each of R, G, and B wavelengths, for example. That is, to secure a sufficient amount of light, a plurality of the illumination units 1 and 11 for emitting light beams having R, G, and B wavelengths can be provided. The illumination units 1 and 11 can be arranged horizontally in a line, as shown in FIG. 2 , or the illumination units 1, 1', 11, and 11' can be arranged vertically in a multi-layer structure, as shown in FIG. 3. The illumination units 1, 1', 11, and 11' in a multi-layer structure can be arranged symmetrically to face each other. These horizontal or multi-layer structures may be formed equally by each illumination unit corresponding to each wavelength. Here, since the elements having the same reference numeral as those in shown in FIG. 2 have the same functions, detailed descriptions thereof will be omitted. Reference numeral 30' denotes a second optical path changer which is arranged to be used in common by the light beams emitted from the upper illumination units 1 and 11 and the lower illumination units 1' and 11' in the multi-layer structure.

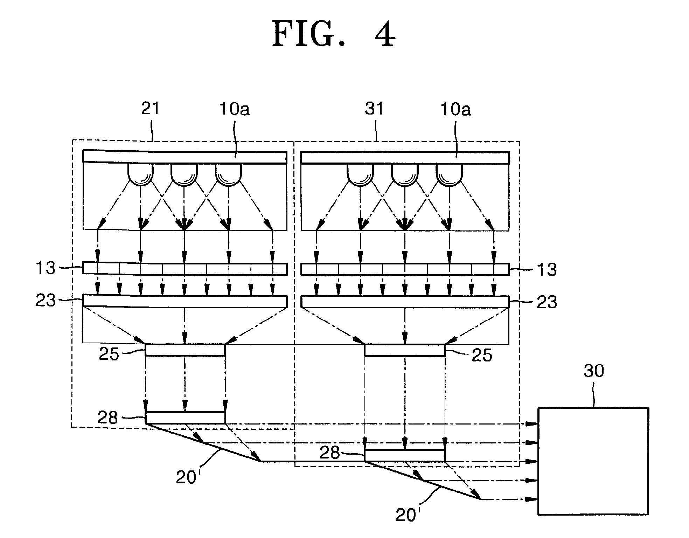

Referring to FIG. 4, each of illumination units 21 and 31 according to another preferred embodiment of the present invention include a third hologram optical element 23 for condensing a light beam emitted from the light emitting device or the light emitting device arrays 10a, 10b, and 10c, a fourth holographic optical element 25 for making the light beam emitted from the third holographic optical element 23, and a fifth holographic optical element 28 for diffracting the light beam emitted from the fourth holographic optical element 25 to reduce the cross section of the light beam. Here, comparing to the above-described embodiments, while only the structures of at least one holographic optical element are different, there is no actual difference in other structures. The structural elements performing the same functions as the elements shown in FIG. 2 have the same reference numerals.

When the light beam is condensed by the third hologram optical element 23 and made into a parallel light beam by the fourth holographic optical element 25, the cross section of the parallel light beam is reduced compared to the cross section of the light beam emitted from the light emitting devices or light emitting device arrays 10a, 10b, and 10c. As the primarily compressed light beam is diffracted by the fifth holographic optical element 28 and reflected by the first optical path changer 20', the light beam proceeds with its cross section further reduced.

The illumination units 21 and 31 having the light emitting devices or light emitting device arrays 10a, 10b, and 10c and the third through fifth holographic optical elements 23, 25, and 28 can be arranged in multiple numbers in a horizontal direction. For example, as shown in FIG. 4, when the firth and sixth illumination units 21 and 31 are arranged horizontally parallel to each other, the fifth holographic optical element 28 is arranged on a plane different from a plane where the neighboring fifth holographic optical element is located, so that the light beam from the neighboring fifth holographic optical element is not hindered from proceeding. That is, the fifth holographic optical element 28 included in the fifth illumination unit 21 is arranged on a plane different from a plane where the fifth holographic optical element 28 included in the fourth illumination unit 31, not to hinder the proceeding path of the light beam emitted from the fourth illumination unit 31. Accordingly, the first optical path changer 20' is independently arranged corresponding to the respective illumination unit 21 and 31.

The illumination units 21 and 31 can be arranged vertically in a multi-layer structure, in addition to the above arrangement in the horizontal direction. Also, when arranged in the multi-layer structure, the illumination units 21 and 31 can be arranged symmetrically to face each other.

Here, a parallel light beam forming unit 13, such as a collimating lens array or a Fresnel lens array, for making the light beam emitted from the light emitting devices or light emitting device arrays 10a. 10b, and 10c into a parallel light beam, can further be provided between the light emitting devices or light emitting device arrays 10a. 10b, and 10c and the third holographic optical element 23. The first optical path changers 20 and 20' change the proceeding path of an incident light having a cross section reduced by the third through fifth holographic optical elements 23, 25, and 28. For example, a reflection mirror can be used as the parallel light beam forming unit 13.

Also, the second optical path changers 30 and 30' selectively transmits or reflects an incident light beam to make the light beam input along different optical paths proceed along the same optical path. Each of the second optical path changers 30 and 30', as shown in FIG. 5, can be formed of the first, second and third dichroic filters 30a, 30b, and 30c which can reflect or transmit the light beam from the light emitting devices or light emitting device arrays 10a. 10b, and 10c according to the wavelength thereof. For example, the first light emitting device or light emitting device array 10a can emit a light beam having an R wavelength, the second light emitting device or light emitting device array 10b can emit a light beam having a G wavelength, and the third light emitting device or light emitting device array 10c can emit a light beam having a B wavelength.

The first dichroic filter 30a reflects only the R light beam and transmits the other G and B light beams, The second dichroic filter 30b reflects only the G light beam and transmits the other R and B light beams. The third dichroic filter 30c reflects only the B light beam and transmits the other R and G light beams. Thus, when the R light beam is incident on the first dichroic filter 30a via the illumination units 1, 11,21, and 31, and the first optical path changers 20 and 20', the R light beam is reflected in a direction indicated by arrows A in FIG. 5. Thus, the R, G, and B color light beams having different optical paths proceed along the same path.

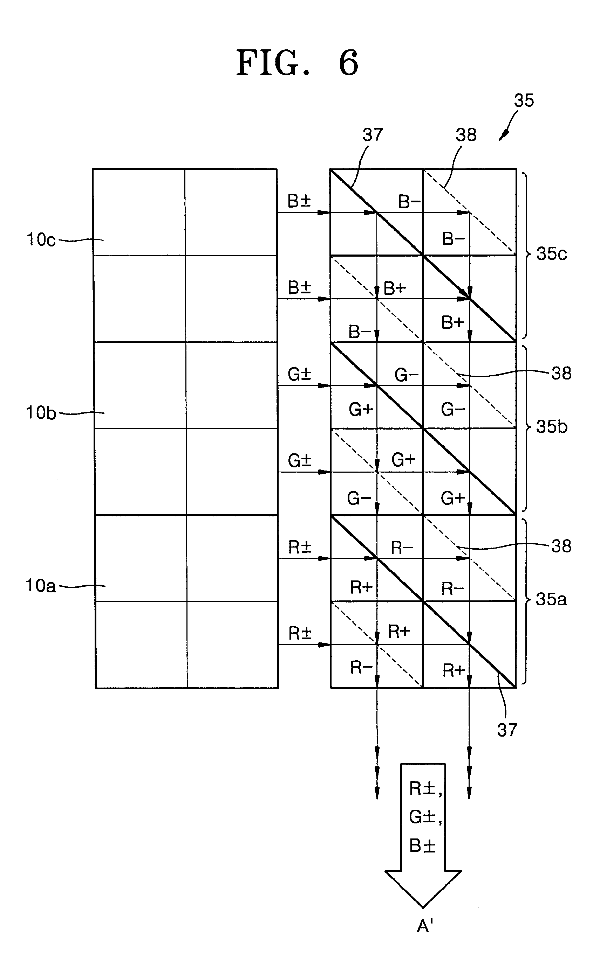

A cholesteric band modulation filter 35 for selectively reflecting or transmitting an incident light beam according to the polarization direction thereof can be used as the second optical path changer, as shown in FIG. 6. The cholesteric band modulation filter 35 can change an optical path of a light beam having a predetermined wavelength, for example, by reflecting a light beam of right circular polarization and transmitting a light beam of left circular polarization, or by transmitting a light beam of right circular polarization and reflecting a light beam of left circular polarization. The cholesteric band modulation filter 35 can be formed of first, second, and third cholesteric band modulation filters 35a, 35b, and 35c for selectively transmitting or reflecting a light beam having an R wavelength, a light beam having a G wavelength, and a light beam having a B wavelength, according to the direction of circular polarization.

To improve the efficiency of light by using both of a light beam of right circular polarization and a light beam of left circular polarization, a first mirror surface 37 for reflecting a light beam of right circular polarization and transmitting a light beam of left circular polarization with respect to a wavelength corresponding to each filter, and a second mirror surface 38 for transmitting a light beam of right circular polarization and reflecting a light beam of left circular polarization, are appropriately arranged in each of the first, second, and third cholesteric band modulation filters 35a, 35b, and 35c. Here, the light beam of right circular polarization is indicated by + and the light beam of right circular polarization is indicated by -. For example, R+ denotes an R light beam of right circular polarization and R- denotes an R light beam of left circular polarization.

The R, G, and B light beams passing through the illumination units 1, 11, 21, and 31, and the first optical path changers 20 and 20' proceed toward the first, second, and third cholesteric band modulation filters 35a, 35b, and 35c. The first, second, and third cholesteric band modulation filters 35a, 35b, and 35c include the first and second mirror surfaces 37 and 38 in a diagonal direction with respect to the direction in which the light beam is input. Here, in the proceeding path of the R light beam, when a light beam of right circular polarization (R+) of the R light beam reflected by the first optical path changers 20 and 20' first meets the first mirror surface 37, the R+ light beam is reflected by the first mirror surface 37. Then, when meeting the second mirror surface 38 on the proceeding path thereof, the R+ light beam passes through the second mirror surface 38 and proceeds in a direction A'. Meanwhile, when the R+ light beam first meets the second mirror surface 38, the R+ light beam transmits the second mirror surface 38. Then, the R+ light beam is reflected by the first mirror surface 37 and proceeds in the direction A'.

Also, when a light beam of left circular polarization (R-) of the R light beam reflected by the first optical path changers 20 and 20' first meets the first mirror surface 37, the R+ light beam transmits the first mirror surface 37. Then, when meeting the second mirror surface 38 on the proceeding path thereof, the R- light beam passes through the second mirror surface 38 and proceeds in a direction A'. Meanwhile, when the R- light beam first meets the second mirror surface 38, the R-light beam is reflected by the second mirror surface 38 and proceeds in the direction A'.

The above operations are equally applied to G light beams of right and left circular polarization (G+) and (G-), and B light beams of right and left circular polarization (B+) and (B-), so that the light beams proceed in the same direction A'. The first, second, and third cholesteric band modulation filters 35a, 35b, and 35c selectively transmit or reflect a light beam having a corresponding wavelength and transmit all light beams having different wavelengths regardless of the polarization direction. Thus, since both the light beams of right circular polarization and left circular polarization can be used effectively, the efficiency of light is improved.

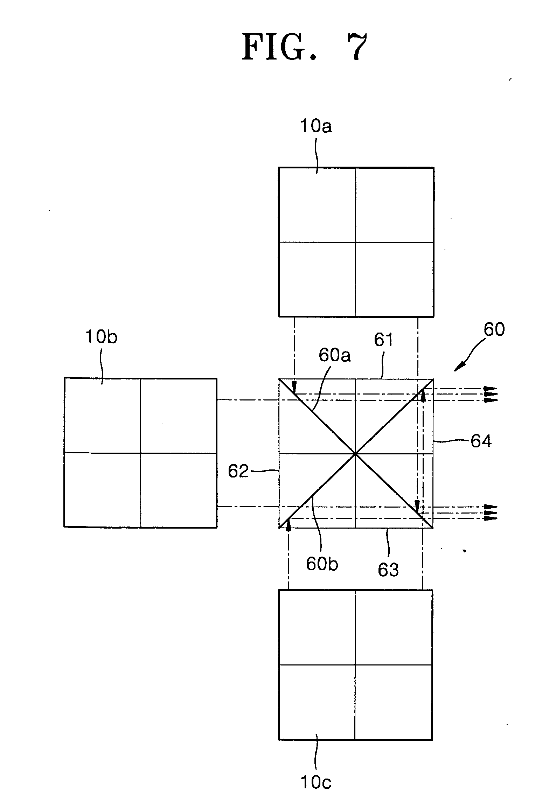

Unlike the above, the second optical path changer, as shown in FIG. 7, can be formed of an X prism 60 or an X type dichroic filter film. Here, the light emitting devices or light emitting device arrays 10a. 10b, and 10c are arranged to be radially separated at a predetermined angle with respect to the X prism 60 or X type dichroic filter film. The X prism 60 includes first, second, and third incident surfaces 61, 62, and 63 disposed to face the illumination units 1 and 11 corresponding to each of R, G, and B colors, and a single exit surface 64. Also, the X prism 60 includes third and fourth mirror surfaces 60a and 60b which are arranged to cross each other like a letter X to selectively transmit or reflect an incident light according to the wavelength thereof. For example, the third mirror surface 60a reflects the R light beam while transmitting the G and B light beams having different wavelengths. The fourth mirror surface 60b reflects the B light beam while transmitting the R and G light beams having different wavelengths.

The R, G, and B color light beams emitted from the light emitting devices or light emitting device arrays 10a. 10b, and 10c and passing through at least one holographic optical elements 15 and 18, or 23, 25, and 28, and the first optical path changers 20 and 20' are incident on the first through third incident surfaces 61, 62, and 63 of the X prism 60 corresponding thereto. The incident R, G, and B color light beams pass through or are reflected by the third and fourth mirror surfaces 60a and 60b and exit through the exit surface 64 to proceed in the same direction.

According to the above preferred embodiment, the illumination units 1, 11, 21, and 31 can be arranged in various ways, and the second optical path changers 30 35, and 60 can be selected and provided suitable for the arrangement. Also, at least one holographic optical element described in the above preferred embodiment can be replaced by at least one diffractive optical element having the same function.

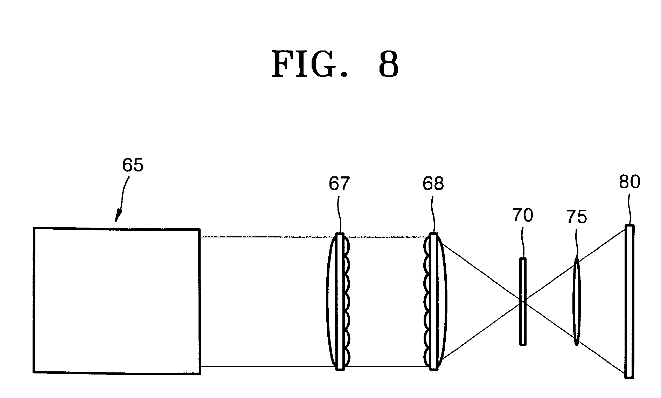

Meanwhile, a projector adopting the illumination system according to the present invention, as shown in FIG. 8, includes an illumination system 65 for emitting a light beam, a display device 70 for forming an image by using the R, G, and B color light beams emitted from the illumination system 65, and a projection lens unit 75 for making the image formed by the display device 70 to proceed toward a screen 80. The illumination system 65 is formed of an illumination unit and a first optical path changer. The illumination unit includes at least one light emitting device for emitting a light beam having a predetermined wavelength and at least one holographic optical element for reducing a profile of the light beam emitted from the light emitting device. The first optical path changer changes a proceeding path of an incident light beam input through the holographic optical element.

The illumination system 65 indicates the illumination system described with reference to FIGS. 2 through 7 and is indicated by reference numeral 65 in FIG. 8. An LED (light emitting diode), an LD (laser diode), an organic EL (electro luminescent), or FED (field emission display) can be used as the light emitting devices or light emitting device arrays 10a. 10b, and 10c. The light emitting devices or light emitting device arrays are formed of the first through third light emitting devices or light emitting device arrays 10a. 10b, and 10c emitting R, G, and B color light beams. Also, the illumination units 1 and 11 having the same structure may be provided further in a horizontal or vertical direction to secure a sufficient amount of light.

The holographic optical elements 15 and 18, or 23, 25, and 28 can be replaced by a diffractive optical device having the same function and the objective of the present invention can be achieved thereby.

When the first through third light emitting devices or light emitting device arrays 10a. 10b, and 10c are arranged in a line, all R, G, and B color light beams passing through the holographic optical elements 15 and 18 or 23, 25, and 28, and the first optical path changers 20 and 20' are output in the same direction and parallel to one another. The second optical path changer can be formed of the first through third dichroic filters 30a, 30b, and 30c to change a proceeding path of the R, G, and B color light beams by selectively transmitting or reflecting the light beams according to the wavelength of the incident light beam.

A fly eye lens 67 for making the R, G, and B color light beams proceeding in the same direction via the first through third dichroic filters 30a, 30b, and 30c distributed uniformly, and a relay lens 68 for condensing the light beam toward the display device 70, can be provided further. Then, a color image is formed by the display device 70 using the R, G, and B light beams. The display device 70 may be a mobile mirror apparatus for realizing a color image by on/off switching operations of micromirrors according to an image signal or an LCD device for realizing a color image by polarizing and modulating an incident light beam.

Here, although the first through third dichroic filters 30a, 30b, and 30c are used as the second optical path changer in the above preferred embodiment, the cholesteric band modulation filter 35 for transmitting or reflecting an incident light beam according to the wavelength of circular polarization of the light beam can be used.

Also, the X prism 60 or X type dichroic filter for changing the optical path of the R, G, and B color light beams input from different directions to proceed in the same direction by reflecting or transmitting the incident light beam according to the wavelength thereof, can be used. Here, the first through third light emitting devices or light emitting device arrays 10a, 10b, and 10c for emitting R, G, and B color light beams are arranged to be separated radially at a predetermined angle with respect to the X prism 60 or X type dichroic filter, as shown in FIG. 7. The illumination system having the above structure can replace the illumination system including the first through third light emitting devices or light emitting device arrays 10a, 10b, and 10c and the dichroic filters 30a, 30b, and 30c.

The R, G, and B color light beams emitted from the illumination system 65 are incident on the display device 70 after passing through the fly eye lens 67 and the relay lens 68, to form a color image. The color image is magnified by the projection lens unit 75 and then formed on the screen 80.

As described above, in the illumination system according to the present invention, color purity is improved b using the light emitting device or light emitting device array for emitting a light beam having a narrow spectrum of a desired wavelength band. Also, color gamut having a wider distribution can be secured and the cross section of a light beam emitted from a holographic optical element or diffractive optical device is minimized, so that the illumination system is made compact and loss of light can be reduced. Further, less heat is generated compared to the conventional lamp light source and the life span is extended.

Furthermore, in the projector adopting the illumination system according to the present invention, since time sequential driving by the illumination system having a light emitting device is possible, the color wheel is not needed. Since a on/off switching operation faster than a rotation speed of the color wheel is possible, a high frame rate can be realized and power consumption can be reduced. Thus, the projector adopting the illumination system according to the present invention can provide an image having a high resolution and quality.

## Claims

1. An illumination system comprising:
an illumination unit including at least one light emitting device (10a, 10b, 10c) for emitting a light beam having a predetermined wavelength and at least one holographic optical element (15, 18, 23, 25, 28) for reducing a cross section of the light beam emitted from the light emitting device (10a, 10b, 10c); and
a first optical path changer (20, 20') for changing a proceeding path of an incident light passing through the holographic optical element (15, 18, 23, 25, 28).

2. The illumination system as claimed in claim 1, wherein the light emitting device (10a, 10b, 10c) has an array structure.

3. The illumination system as claimed in claim 1 or 2, wherein the holographic optical element (15, 18, 23, 25, 28) comprises:
a first holographic optical element (15) for changing a proceeding direction of the light beam emitted from the light emitting device (10a, 10b, 10c) or light emitting device array; and
a second holographic optical element (18) designed to reduce a diffraction angle of an incident light beam of which the proceeding direction is changed by the first holographic optical element (15), and
wherein the holographic optical element (15, 18) reduces a cross section of an incident light beam when the light beam is reflected by the first optical path changer (20, 20').

4. The illumination system as claimed in claim 3, wherein the first holographic optical element (15) is designed to make an incident light beam to be incident on the second holographic optical element (18) inclined at a predetermined angle and to be parallel to each other.

5. The illumination system as claimed in any of claims 1 to 4, wherein the illumination unit is further arranged in a multi-layer structure.

6. An illumination system according to claim 1 wherein the illumination unit comprises:
at least one light emitting device (10a, 10b, 10c) or light emitting device array;
the at least one holographic optical element (15, 18, 23, 25, 28) comprises:
a third holographic optical element (23) for condensing the light beam emitted from the light emitting device (10a, 10b, 10c) or light emitting device array;
a fourth holographic optical element (25) for making an incident light beam passing through the third holographic optical element (23) a parallel light beam with the reduced cross section thereof;
a fifth holographic optical element (28) designed to reduce a diffraction angle of an incident light beam which is made parallel by the fourth holographic optical element (25); and
the first optical path changer (20, 20') is for changing the proceeding path of the incident light beam passing through the fifth holographic optical element (28).

7. The illumination system as claimed in any of claims 1 to 6, wherein the light emitting device (10a, 10b, 10c) or light emitting device array is one of a light emitting diode (LED), a laser diode (LD), an organic electro luminescent (EL), and a field emission display (FED).

8. The illumination system as claimed in any of claims 1 to 7, wherein the first optical path changer (20, 20') is a reflection mirror.

9. The illumination system as claimed in any of claims 1 to 8, further comprising a second optical path changer (30, 30') for changing a proceeding path of the light beam passing through the first optical path changer (20, 20') by selectively transmitting or reflecting the light beam.

10. The illumination system as claimed in claim 9, wherein a plurality of light emitting devices (10a, 10b, 10c) or light emitting device arrays for emitting light beams having different wavelengths are arranged in a line in a horizontal direction.

11. The illumination system as claimed in claims 9 or 10, wherein the second optical path changer (30, 30') is a dichroic filter (30a, 30b, 30c) for reflecting or transmitting a light beam passing through the first optical path changer (20, 20') according to the wavelength thereof.

12. The illumination system as claimed in any of claims 9 to 11, wherein the second optical path changer (30, 30') is a cholesteric band modulation filter (35) for reflecting or transmitting the light passing through the first optical path changer (20, 20') according to the polarization direction and wavelength thereof.

13. The illumination system as claimed in claim 12, wherein the cholesteric band modulation filter (35) comprises a first mirror surface for reflecting a light beam of right circular polarization and transmitting a light beam of left circular polarization, and a second mirror surface for transmitting a light beam of right circular polarization and reflecting a light beam of left circular polarization, with respect to a beam light having a predetermined wavelength.

14. The illumination system as claimed in any of claims 9 to 13, wherein a plurality of light emitting devices (10a, 10b, 10c) or light emitting device arrays for emitting light beams having different wavelengths are arranged to be separated from one another at a predetermined angle.

15. The illumination system as claimed in any of claims 9 to 14, wherein the second optical path changer (30, 30') is an X prism or X type dichroic filter.

16. The illumination system as claimed in any of claims 6 or 7 to 15 as far as depending on claim 6, wherein the light emitting devices (10a, 10b, 10c) or light emitting device arrays, the third through fifth holographic optical elements, and the first optical path changer (20, 20') are further arranged in a multi-layer structure so that a sufficient amount of light is secured.

17. The illumination system as claimed in claim 16, wherein the multi-layer structure is in a symmetrical structure.

18. The illumination system as claimed in any of claims 6 or 7 to 17 as far as depending on claim 6, wherein the fifth holographic optical element (28) is disposed on a plane different from a plane of a neighboring fifth holographic optical element (28) and does not prevent a proceeding path of a light beam from the neighboring fifth holographic optical element (28).

19. The illumination system as claimed in any of claims 6 or 7 to 18 as far as depending on claim 6, further comprising a parallel light beam forming unit for making the light beam emitted from the light emitting devices (10a, 10b, 10c) or light emitting device arrays a parallel light beam.

20. The illumination system as claimed in claim 19, wherein the parallel light beam forming unit (13) is a collimating lens array or Fresnel lens array.

21. A projector comprising:
an illumination system according to any of claims 1 to 20;
a display device (70) for forming an image by processing a light beam input from the first optical path changer (20, 20') according to an image signal; and
a projection lens unit (75) for magnifying the image formed by the display device (70) and projecting the magnified image toward a screen (80).

22. An illumination system comprising:
at least one illumination unit having at least one light emitting device (10a, 10b, 10c) for emitting a light beam having a predetermined wavelength and at least one diffractive optical device for reducing a cross section of the light beam emitted from the light emitting device (10a, 10b, 10c); and
a first optical path changer (20, 20') for changing a proceeding path of an incident light beam input through the diffractive optical device.

23. The illumination system as claimed in claim 22, wherein the light emitting device (10a, 10b, 10c) has an array structure.

24. The illumination system as claimed in either claim 22 or claim 23, wherein the light emitting device (10a, 10b, 10c) is one of a light emitting diode (LED), a laser diode (LD), an organic electro luminescent (EL), and a field emission display (FED).

25. The illumination system as claimed in any of claims 22 to 24, wherein the diffractive optical element comprises:
a first diffractive optical device for changing a proceeding direction of the light beam emitted from the light emitting device (10a, 10b, 10c) or light emitting device array; and
a second diffractive optical device designed to reduce a diffraction angle of an incident light beam of which the proceeding direction is changed by the first diffractive optical device, so that a cross section of an incident light beam when reflected by the first optical path changer (20, 20') is reduced.

26. The illumination system as claimed in any of claims 22 to 24, wherein the diffractive optical device comprises:
a third diffractive optical device for condensing the light beam emitted from the light emitting device (10a, 10b, 10c) or light emitting device array;
a fourth diffractive optical device for making an incident light beam passing through the third diffractive optical device a parallel light beam with a reduced cross section thereof; and
a fifth diffractive optical device designed to reduce a diffraction angle of an incident light beam which is made parallel by the fourth diffractive optical device.
